# EUROPÄISCHE PATENTSCHRIFT

(11) **EP 1 209 456 B1**
(45) Veröffentlichungstag und Bekanntmachung des Hinweises auf die Patenterteilung: **23.04.2003**
(21) Anmeldenummer: 00125654.4
(22) Anmeldetag: 23.11.2000
(51) Int. Cl.: G01M 13/02

(54) **Anordnung zur Simulierung von Krafteinflüssen auf das Rad eines Kraftfahrzeugs**
Arrangement for the simulation of the influence of forces on a vehicle wheel
Dispositif pour simuler l' influence des forces dans la roue d'un vehicule

(43) Veröffentlichungstag der Anmeldung: 29.05.2002
(73) Patentinhaber: Benteler Automobiltechnik GmbH, 33102 Paderborn (DE)
(72) Erfinder: Egold, Karl, 39100 Paderborn (DE); Relard, Hermann, 33129 Delbrück (DE); Wingenbach Dr., Michael, 33100 Paderborn (DE)
(74) Vertreter: Bockermann, Rolf, Dipl.-Ing.

(56) Entgegenhaltungen:
- EP-A- 0 114 327
- EP-A- 0 181 411

## Beschreibung

Die Erfindung betrifft eine Anordnung zur Simulierung der aus dem Fahrbetrieb eines Kraftfahrzeugs resultierenden Krafteinflüsse auf das Rad eines Kraftfahrzeugs gemäß den Merkmalen im Oberbegriff des Patentanspruchs 1.

Eine solche Anordnung erlaubt es, unterschiedliche Krafteinflüsse aus den drei Kraftrichtungen in einem Radaufstandpunkt einzuleiten und dadurch die Krafteinflüsse der Straße im Fahrtest wiederzugeben.

Im Umfang der EP 0 181 411 A1 ist eine Anordnung zur Einleitung von mindestens zwei, insbesondere senkrecht zueinander wirkenden, Kräften in einen gemeinsamen Krafteinleitungspunkt eines zu prüfenden Bauteils bekannt, bei dem die Kräfte über Krafteinleitungselemente so übertragen werden, dass sich der theoretische bzw. konstruktiv festgelegte Krafteinleitungspunkt auch bei Bewegungen des zu prüfenden Bauteils und bei Änderungen der Kraftangriffswinkel nicht ändert. Bei dieser Anordnung sind mindestens zwei ineinander angeordnete Kugelgelenke vorgesehen, deren gemeinsamer Mittelpunkt den Krafteinleitungspunkt bildet. Eine Gelenkkugel oder eine Gelenkschale sind mit dem zu prüfenden Bauteil und mindestens zwei Gelenkschalen oder eine Gelenkkugel und mindestens eine Gelenkscheibe mit den Krafteinleitungselementen verbunden. Durch die Verwendung von ineinander angeordneten Kugelgelenken bleibt der theoretische bzw. konstruktiv festgelegte Krafteinleitungspunkt unter allen Prüfbedingungen erhalten.

Der Erfindung liegt - ausgehend vom Stand der Technik - die Aufgabe zugrunde, eine Anordnung der eingangs genannten Art zu schaffen, welche dieselbe Funktionalität, jedoch unter Verwendung von einfachen Bauteilen gewährleistet.

Diese Aufgabe wird nach der Erfindung mit den im kennzeichnenden Teil des Patentanspruchs 1 aufgeführten Merkmalen gelöst.

Kernpunkt der Erfindung ist die spielfreie kardanische Lagerung des Radaufstandpunkts über zwei ineinander geschachtelte Raumgelenke mit unterschiedlichen Radien. Durch diesen verlaufen die Richtungen der simulierbaren Längskraft, der Seitenkraft und der Vertikalkraft. Alle drei Kraftrichtungen stehen nahezu orthogonal zueinander, erlauben es dennoch, die Winkel in Grenzen relativ zueinander zu variieren. Die bei der erfindungsgemäßen Anordnung zur Anwendung gelangenden Bauteile führen bei kurzen Fertigungszeiten zu einem kleinen Bauraum, wobei dennoch eine einfache Größenvariation möglich ist. Die einfachen Bauteile ermöglichen darüberhinaus eine vereinfachte Instandhaltung. Mithin kann der gesamte Konstruktions- und Fertigungsaufwand im Vergleich zum Stand der Technik erheblich gesenkt werden.

Mit Hilfe der 2. und 3. Schubstange können Seitenkräfte und Längskräfte simuliert werden. Das Krafteinleitungsglied simuliert die aus dem Radaufstand sich ergebende Vertikalkraft. Darüberhinaus kann über die 1. Schubstange eine weitere Längskraft simuliert werden. Das Aufbringen von Längskräften über die 1. und die 3. Schubstange erlaubt es in einfachster Weise, Bremsmomente zu simulieren. Die Schubstangen und das Krafteinleitungsglied stehen unter dem Einfluss von bevorzugt hydraulisch beaufschlagbaren Zylindern, wobei im Prinzip beliebige Frequenzen aufgegeben werden können. Unter bestimmten Versuchsbedingungen sind auch pneumatisch beaufschlagbare Zylinder denkbar.

Das Gehäuse ist grundsätzlich gabelförmig gestaltet mit einem oberen und einem unteren Schenkel, wobei die Stirnseiten der Schenkel durch eine stirnseitige Halteplatte zueinander distanziert und lagefixiert sind.

Entsprechend den Merkmalen des Patentanspruchs 2 ist es von Vorteil, wenn das 1. Raumgelenk aus einer umfangsseitig des Vertikalbolzens festgelegten, eine kugelabschnittsförmige äußere Oberfläche aufweisenden Hülse und einer in dem Gehäuse fixierten, hinsichtlich ihrer inneren Oberfläche an die Oberfläche der Hülse angepassten Buchse gebildet ist, wobei das Gehäuse oberhalb und unterhalb der Buchse sich konisch erweiternde innere Ausnehmungen besitzt. Die sich konisch erweiternden inneren Ausnehmungen sind innerhalb von zwei Druckstücken gebildet, die von oben und unten in entsprechenden Aufnahmen der Schenkel des Gehäuses lösbar fixiert werden können.

Die konischen Ausnehmungen des Gehäuses sind so groß bemessen, dass sämtlichen denkbaren Relativbewegungen des Gehäuses zum Vertikalbolzen Rechnung getragen werden kann. Die Hülse liegt bevorzugt gegen einen Absatz des Vertikalbolzens an. Ihre Lage wird durch eine Distanzhülse gesichert, die sich zwischen der Hülse und der unteren horizontalen Begrenzung der U-förmigen Ausnehmung im Radadapter erstreckt. Hülse und Distanzhülse werden über den Absatz am Vertikalbolzen mit Hilfe einer von unten in den Vertikalbolzen gedrehten Fixierschraube eindeutig lageorientiert, welche sich ihrerseits am Radadapter abstützt.

Das 2. Raumgelenk ist vorteilhaft gemäß den Merkmalen des Patentanspruchs 3 durch eine an dem Gehäuse umfangsseitig des 1. Raumgelenks lagefixierte Hülse mit einer kugelabschnittsförmigen äußeren Oberfläche sowie einer zylindrischen inneren Oberfläche und einem hinsichtlich seiner inneren Oberfläche an die äußere Oberfläche der Hülse angepassten ringförmigen Gelenkkopf der 3. Schubstange gebildet.

Die Hülse des 2. Raumgelenks wird mit Hilfe der Druckstücke örtlich fixiert. Dazu weisen die Druckstücke entsprechende zylindrische Aufnahmen für die Hülse auf.

Um eine einwandfreie spielfreie Montage der beiden Raumgelenke sicherzustellen, ist nach Patentanspruch 4 zwischen die Buchse des 1. Raumgelenks und die zylindrische innere Oberfläche der Hülse des 2. Raumgelenks eine Ausgleichsbuchse integriert. Buchse und Ausgleichsbuchse stützen sich einerseits direkt an dem oberen Druckstück und über eine Druckscheibe, vorzugsweise aus Kunststoff, am unteren Druckstück ab.

Die Montage des Radadapters sowie der Raumgelenke und auch die Wartung werden erleichtert und vereinfacht, wenn entsprechend Patentanspruch 5 der Radadapter zweiteilig gestaltet und der Vertikalbolzen lösbar zwischen die beiden Teile eingegliedert ist. Hierbei greift der gegebenenfalls mehrteilige Vertikalbolzen mit einem zylindrischen Längenabschnitt in eine entsprechende Ausnehmung des Unterteils des Radadapters ein. Am oberen Ende besitzt der Vertikalbolzen eine flanschartige Konsole, welche an die obere horizontale Begrenzung der U-förmigen Ausnehmung geschraubt ist, die Bestandteil des Oberteils des Radadapters bildet. Mittels eines zentralen Zapfens, der von der Konsole aus nach oben in eine Ausnehmung des Oberteils greift, ist der Vertikalbolzen einwandfrei axial zwischen den beiden Teilen des Radadapters zentriert.

Auch das sich im wesentlichen vertikal erstreckende stangenartige Krafteinleitungsglied ist mit dem Radadapter raumgelenkig gekoppelt. Dazu weist der Radadapter zwei nach unten gerichtete Laschen auf. Die Laschen werden in horizontaler Richtung von einem Tragbolzen durchsetzt. Der Tragbolzen trägt eine Hülse mit einer kugelabschnittsförmigen äußeren Oberfläche. Diese wird von einem angepassten ringförmigen Gelenkkopf umgriffen, der mit dem Krafteinleitungsglied verbunden ist. Die Hülse ist zu den beiden Laschen durch Distanzbuchsen in axialer Richtung des Tragbolzens lagefixiert.

Damit der Radadapter bei einer Krafteinleitung aus den drei Kraftrichtungen fixiert ist, erstreckt sich nach Patentanspruch 7 zwischen dem unteren Endabschnitt des Krafteinleitungsglieds und einer zu der Anlenkung des Krafteinleitungsglieds an den Radadapter in der vertikalen Ebene seitlich versetzten Anschlaglasche eine Schrägstrebe. Diese Schrägstrebe wird gelöst, das heißt außer Funktion gesetzt, wenn mit Hilfe der 1. Schubstange sowie der 3. Schubstange Bremsmomente simuliert werden sollen.

Die Erfindung ist nachfolgend anhand eines in den Zeichnungen dargestellten Ausführungsbeispiels näher erläutert. Es zeigen:
- Figur 1: in schematischer Perspektive eine Anordnung zur Simulierung der aus dem Fahrbetrieb eines Kraftfahrzeugs resultierenden Krafteinflüsse auf das Rad eines Kraftfahrzeugs;
- Figur 2: in vergrößerter Darstellung den Ausschnitt II der Figur 1 im vertikalen Längsschnitt und
- Figur 3: einen vertikalen Querschnitt durch die Darstellung der Figur 2 entlang der Linie III-III in Richtung der Pfeile IIIa gesehen.

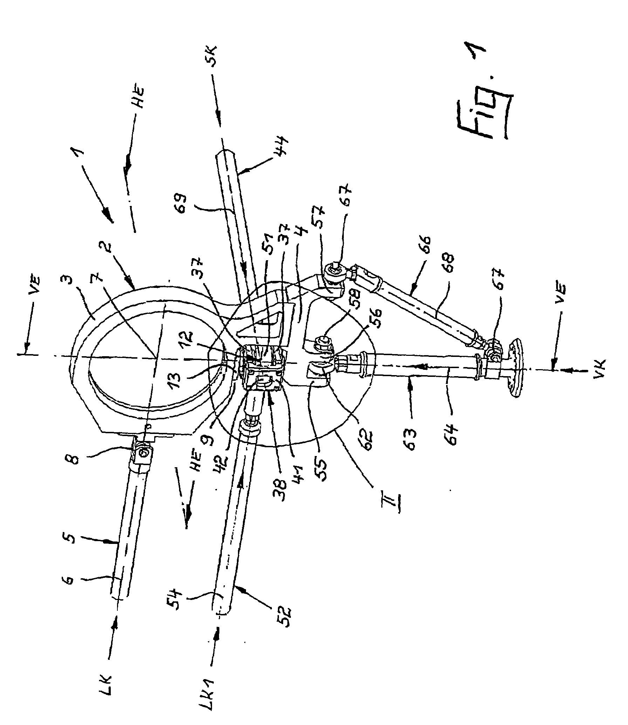

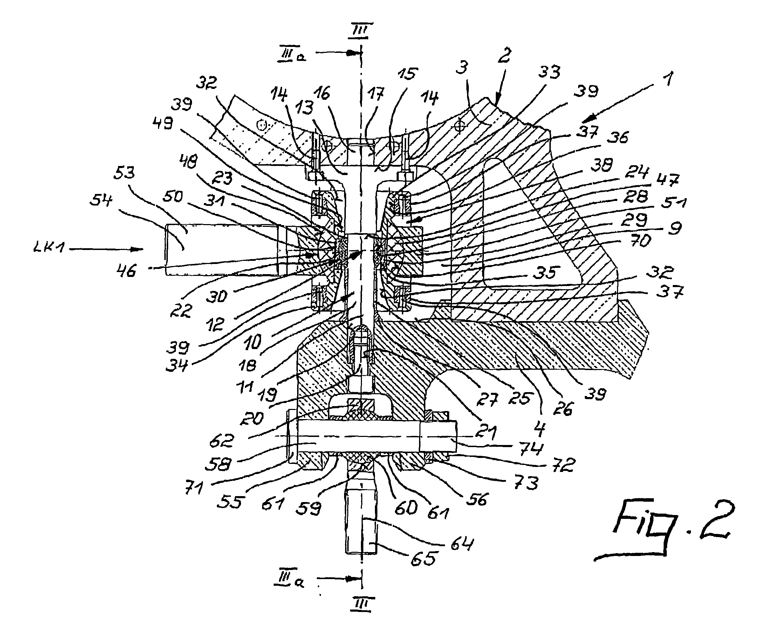

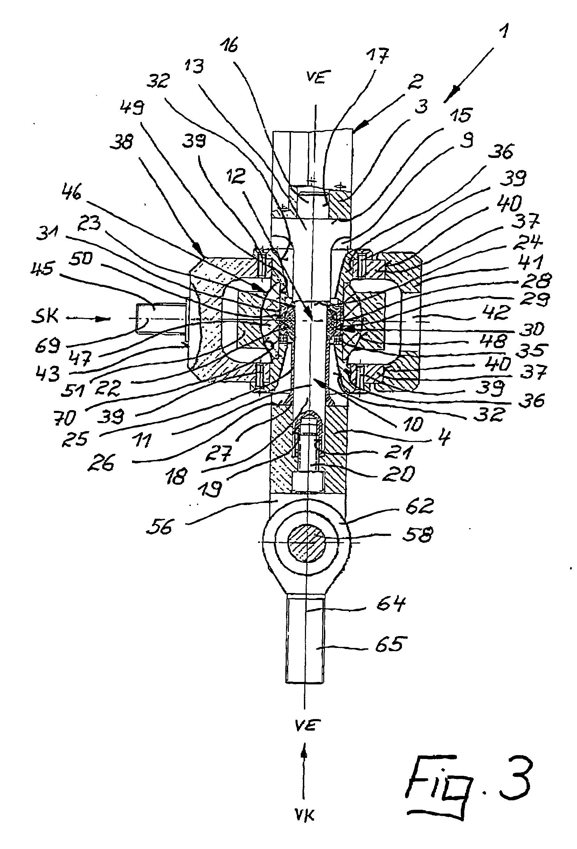

Mit 1 ist in den Figuren 1 bis 3 eine Anordnung zur Simulierung der aus dem Fahrbetrieb eines Kraftfahrzeugs resultierenden Krafteinflüsse auf das Rad eines Kraftfahrzeugs bezeichnet.

Die Anordnung 1 umfasst einen in einer Vertikalebene VE angeordneten rahmenartigen Radadapter 2, der sich aus einem Oberteil 3 zur Aufnahme beispielsweise einer Radnabe mit Zubehör und einem mit dem Oberteil 3 lösbar formschlüssig zusammengefügten Unterteil 4 zusammensetzt.

Seitlich ist an den Oberteil 3 eine 1. Schubstange 5 angelenkt, welche sich mit ihrer Längsachse 6 in einer den Radmittelpunkt 7 schneidenden Horizontalebene HE erstreckt (Figur 1). Die 1. Schubstange 5 dient der Simulierung einer Längskraft LK in Richtung auf den Radmittelpunkt 7, die beispielsweise mit Hilfe eines nicht näher dargestellten hydraulisch und gegebenenfalls auch pulsierend beaufschlagbaren Zylinders erzeugt werden kann. Das Gelenk 8 zwischen der 1. Schubstange 5 und dem Oberteil 3 ist als Raumgelenk ausgebildet.

Durch das Oberteil 3 und das Unterteil 4 des Radadapters 2 wird eine U-förmige Ausnehmung 9 begrenzt, die von einem Vertikalbolzen 10 durchsetzt ist. Die Längsachse 11 des Vertikalbolzens 10 erstreckt sich durch den im Bereich der Ausnehmung 9 liegenden fiktiven Radaufstandpunkt 12 sowie in der durch diesen und den Radmittelpunkt 7 verlaufenden Vertikalebene VE.

Der Vertikalbolzen 10 weist am oberen Ende eine flanschartige Konsole 13 auf, über die er mit Hilfe von Schraubbolzen 14 an der die obere Begrenzung der Ausnehmung 9 bildenden Unterseite 15 des Oberteils 3 des Radadapters 2 festgelegt wird. Von der Konsole 13 steht nach oben ein Zapfen 16 ab, der zentrierend in eine Bohrung 17 des Oberteils 3 greift.

An die Konsole 13 schließt sich nach unten ein im Durchmesser kleiner gehaltener zylindrischer Längenabschnitt 18 an, der in eine Stufenbohrung 19 des Unterteils 4 des Radadapters 2 formschlüssig eingesetzt ist. Die Festlegung dieses Längenabschnitts 18, der mit der Konsole 13 lösbar verbunden sein kann, erfolgt mit Hilfe eines Schraubbolzens 20, der von unten durch die Stufenbohrung 19 in eine Gewindebohrung 21 des Längenabschnitts 18 eingedreht wird.

Das obere Ende des zylindrischen Längenabschnitts 18 des Vertikalbolzens 10 wird von einer eine kugelabschnittsförmige äußere Oberfläche 22 aufweisenden Hülse 23 umgriffen. Der Radius der Oberfläche 22 endet im Radaufstandpunkt 12. Die Festlegung der Hülse 23 an dem durch die Konsole 13 und den zylindrischen Längenabschnitt 18 gebildeten Absatz 24 des Vertikalbolzens 10 wird mit Hilfe einer Distanzhülse 25 bewirkt, die sich an der die untere Begrenzung der U-förmigen Ausnehmung 9 bildenden Oberseite 26 des Unterteils 4 des Radadapters 2 abstützt. Das untere Ende 27 dieser Distanzhülse 25 ist verdickt ausgebildet.

Die Hülse 23 bildet zusammen mit einer hinsichtlich ihrer inneren Oberfläche 28 an die äußere Oberfläche 22 der Hülse 23 angepassten Buchse 29 ein 1.

Raumgelenk 30. Die Buchse 29 ist zusammen mit einer sie umgreifenden Ausgleichsbuchse 31 zwischen zwei mit inneren konischen Ausnehmungen 32 versehenen Druckstücken 33, 34 örtlich fixiert. Die Ausnehmungen 32 erweitern sich nach oben und unten. Der Fixierung dient darüberhinaus eine Druckscheibe 35 aus Kunststoff. Die Druckstücke 33, 34 fassen von oben und unten in Ausnehmungen 36 der Schenkel 37 eines gabelförmigen Gehäuses 38. Sie sind mit Schraubbolzen 39 an den Schenkeln 37 festgelegt. Die Stirnseiten 40 der Schenkel 37 werden durch eine Halteplatte 41 miteinander verbunden. Die mit einer zentralen Öffnung 42 versehene Halteplatte 41 ist stirnseitig der Schenkel 37 angeschraubt.

An der der Halteplatte 41 gegenüberliegenden Stirnseite 43 des Gehäuses 38 ist eine 2. Schubstange 44 über einen Gewindezapfen 45 starr befestigt, über welche eine Seitenkraft SK in Richtung der Längsachse 69 auf den Radaufstandpunkt 12 simuliert werden kann. Auch diese 2. Schubstange 44 steht beispielsweise unter dem Einfluss eines nicht näher dargestellten hydraulisch, gegebenenfalls pulsierend beaufschlagbaren Zylinders.

Beim Fixieren der beiden Druckstücke 33, 34 an den Schenkeln 37 des Gehäuses 38 wird zugleich ein Bestandteil eines 2. Raumgelenks 46 bildende Hülse 47 mit einer kugelabschnittsförmigen äußeren Oberfläche 48 sowie einer zylindrischen inneren Oberfläche 49 festgelegt. Die Ausgleichsbuchse 31 liegt also zwischen der inneren Oberfläche 49 der Hülse 47 und der äußeren Oberfläche 50 der Buchse 29 des 1. Raumgelenks 30.

An die äußere Oberfläche 48 der Hülse 47 ist ein ringförmiger Gelenkkopf 51 einer 3. Schubstange 52 angepasst. Die 3. Schubstange 52 ist über einen Gewindezapfen 53 mit dem Gelenkkopf 51 lösbar verbunden. Die Längsachse 54 der 3. Schubstange 52 erstreckt sich in der Vertikalebene VE des Radadapters 2 durch den Radaufstandpunkt 12. Auch die 3. Schubstange 52 ist in nicht näher dargestellter Weise unter den Einfluss eines insbesondere hydraulisch, gegebenenfalls pulsierend beaufschlagbaren Zylinders gestellt. Mit Hilfe der 3. Schubstange 52 kann eine Längskraft LK1 in Richtung auf den Radaufstandpunkt 12 simuliert werden. Die 3. Schubstange 52 liegt unter der 1. Schubstange 5, aber um 90° versetzt zu der 2. Schubstange 44.

Der Unterteil 4 des Radadapters 2 ist mit insgesamt drei nach unten weisenden Laschen 55, 56, 57 versehen. Zwei Laschen 55, 56 sind paarweise einander zugeordnet und nehmen einen sich horizontal erstreckenden Tragbolzen 58 auf. Der Tragbolzen 58 wird von einer mit einer kugelabschnittsförmigen äußeren Oberfläche 59 versehenen Hülse 60 umgriffen, die durch zwei Distanzhülsen 61 zu den Laschen 55, 56 lageorientiert ist. Die äußere Oberfläche 59 der Hülse 60 wird von einem ringförmigen Gelenkkopf 62 umgriffen, der entsprechend angepasst ist. Der Gelenkkopf 62 bildet Bestandteil eines stangenartigen Krafteinleitungsglieds 63, dessen Längsachse 64 sich koaxial zur Längsachse 11 des Vertikalbolzens 10 erstreckt. Auch dieses Krafteinleitungsglied 63 kann in nicht näher dargestellter Weise unter den Einfluss eines insbesondere hydraulisch, gegebenenfalls auch pulsierend beaufschlagbaren Zylinders gestellt sein. Die Verbindung des Krafteinleitungsglieds 63 mit dem Gelenkkopf 62 erfolgt über einen dem Gelenkkopf 62 zugeordneten Gewindezapfen 65.

Die Lage des Tragbolzens 58 wird durch seinen Kopf 71 und durch eine Mutter 72 gewährleistet, die unter Eingliederung einer Scheibe 73 auf einen Gewindeabschnnitt 74 des Tragbolzens 58 gedreht wird.

Die zu den beiden paarweise einander zugeordneten Laschen 55, 56 seitlich distanzierte dritte Anschlaglasche 57 dient der Festlegung einer Schrägstrebe 66. Die Schrägstrebe 66 ist sowohl an die Anschlaglasche 57 als auch an den unteren Endabschnitt des Krafteinleitungsglieds 63 über Raumgelenke 67 angeschlagen. Ihre Längsachse 68 erstreckt sich in der Vertikalebene VE.

Wie vorstehend bereits angedeutet, ist es mit Hilfe der 1. und 3. Schubstange 5, 52 möglich, aus einem Fahrbetrieb resultierende Längskräfte LK, LK1 zu simulieren. Die Beaufschlagung beider Schubstangen 5, 52 kommt dann in Frage, wenn Bremsmomente simuliert werden. In diesem Fall muss jedoch die Schrägstrebe 66 abgebaut werden.

Über die 2. Schubstange 44 können Seitenkräfte SK und über das Krafteinleitungsglied 63 Vertikalkräfte VK im Radaufstand simuliert werden.

### Bezugszeichenaufstellung

- 1 -: Anordnung
- 2 -: Radadapter
- 3 -: Oberteil v. 2
- 4 -: Unterteil v. 2
- 5 -: 1. Schubstange
- 6 -: Längsachse v. 5
- 7 -: Radmittelpunkt
- 8 -: Gelenk zw. 5 u. 3
- 9 -: Ausnehmung in 2
- 10 -: Vertikalbolzen
- 11 -: Längsachse v. 10
- 12 -: Radaufstandpunkt
- 13 -: Konsole v. 10
- 14 -: Schraubbolzen
- 15 -: Unterseite v. 3
- 16 -: Zapfen an 10
- 17 -: Bohrung in 3 f. 16
- 18 -: Längenabschnitt v. 10
- 19 -: Stufenbohrung in 4
- 20 -: Schraubbolzen
- 21 -: Gewindebohrung in 18
- 22 -: äußere Oberfläche v. 23
- 23 -: Hülse v. 30
- 24 -: Absatz an 10
- 25 -: Distanzhülse
- 26 -: Oberseite v. 4
- 27 -: unteres Ende v. 25
- 28 -: innere Oberfläche v. 29
- 29 -: Buchse v. 30
- 30 -: 1. Raumgelenk
- 31 -: Ausgleichsbuchse
- 32 -: Ausnehmungen in 33, 34
- 33 -: oberes Druckstück
- 34 -: unteres Druckstück
- 35 -: Druckscheibe
- 36 -: Ausnehmungen in 37
- 37 -: Schenkel v. 38
- 38 -: Gehäuse
- 39 -: Schraubbolzen
- 40 -: Stirnseiten v. 37
- 41 -: Halteplatte
- 42 -: Öffnung in 41
- 43 -: Stirnseite v. 38
- 44 -: 2. Schubstange
- 45 -: Gewindezapfen an 43
- 46 -: 2. Raumgelenk
- 47 -: Hülse v. 46
- 48 -: äußere Oberfläche v. 47
- 49 -: innere Oberfläche v. 47
- 50 -: äußere Oberfläche v. 29
- 51 -: Gelenkkopf v. 52
- 52 -: 3. Schubstange
- 53 -: Gewindezapfen f. 52
- 54 -: Längsachse v. 52
- 55 -: Lasche an 4
- 56 -: Lasche an 4
- 57 -: Lasche an 4
- 58 -: Tragbolzen
- 59 -: äußere Oberfläche v. 60
- 60 -: Hülse auf 58
- 61 -: Distanzhülsen
- 62 -: Gelenkkopf v. 63
- 63 -: Krafteinleitungsglied
- 64 -: Längsachse v. 63
- 65 -: Gewindezapfen
- 66 -: Schrägstrebe
- 67 -: Raumgelenke f. 66
- 68 -: Längsachse v. 66
- 69 -: Längsachse v. 44
- 70 -: innere Oberfläche v. 51
- 71 -: Kopf v. 58
- 72 -: Mutter f. 58
- 73 -: Scheibe
- 74 -: Gewindeabschnitt v. 58

- HE -: Horizontalebene
- LK -: Längskraft v. 5
- LK1 -: Längskraft
- SK -: Seitenkraft
- VE -: Vertikalebene
- VK -: Vertikalkräfte

## Patentansprüche

1. Anordnung zur Simulierung der aus dem Fahrbetrieb eines Kraftfahrzeugs resultierenden Krafteinflüsse auf das Rad eines Kraftfahrzeugs, welche einen Radadapter (2) mit einer U-förmigen Ausnehmung (9) aufweist, der über ein 1. Raumgelenk (30) mit einer eine Seitenkraft (SK) simulierenden 2. Schubstange (44) und mit einem sich unterhalb der Ausnehmung (9) im wesentlichen senkrecht erstreckenden, eine Vertikalkraft (VK) ausübenden stangenartigen Krafteinleitungsglied (63) verbunden ist, wobei der Mittelpunkt des 1. Raumgelenks (30) mit dem Mittelpunkt des 2. Raumgelenks (46) zusammen fällt, an das eine Längskraft (LK1) simulierende 3. Schubstange (52) gekoppelt ist, **gekennzeichnet durch** folgende Merkmale:
- der Radadapter (2) ist rahmenartig ausgebildet, in einer Vertikalebene (VE) angeordnet und mit einer sich in einer den Radmittelpunkt (7) schneidenden Horizontalebene (HE) erstreckenden, eine Längskraft (LK) simulierenden 1. Schubstange (5) gelenkig gekoppelt,
- die Ausnehmung (9) liegt im Bereich des mit den Mittelpunkten des 1. und 2. Raumgelenks (30, 46) zusammen fallenden fiktiven Radaufstandpunkts (12) und ist von einem Vertikalbolzen (10) durchsetzt, der sich mit seiner Längsachse (11) in der **durch** den Radaufstandpunkt (12) und den Radmittelpunkt (7) verlaufenden Vertikalebene (VE) erstreckt,
- der Vertikalbolzen (10) ist über das 1. Raumgelenk (30) mit einem mehrteiligen Gehäuse (38) gekuppelt, das mit der sich quer zur Vertikalebene (VE) erstreckenden, bezüglich ihrer horizontalen Längsachse (69) **durch** den Radaufstandpunkt (12) verlaufenden 2. Schubstange (44) starr verbunden und mit der zur 2. Schubstange (44) um 90° versetzten, hinsichtlich ihrer Längsachse (54) sich in der Vertikalebene (VE) und **durch** den Radaufstandpunkt (12) erstreckenden 3. Schubstange (52) über das 2. Raumgelenk (46) gekuppelt ist,
- die Längsachse (64) des Krafteinleitungglieds (63) erstreckt sich koaxial zur Längsachse (11) des Vertikalbolzens (10).

2. Anordnung nach Patentanspruch 1, bei welcher das 1. Raumgelenk (30) aus einer umfangsseitig des Vertikalbolzens (10) festgelegten, eine kugelabschnittsförmige äußere Oberfläche (22) aufweisenden Hülse (23) und einer in dem Gehäuse (38) fixierten, hinsichtlich ihrer inneren Oberfläche (28) an die Oberfläche (22) der Hülse (23) angepassten Buchse (29) gebildet ist, wobei das Gehäuse (38) oberhalb und unterhalb der Buchse (29) sich konisch erweiternde innere Ausnehmungen (32) besitzt.

3. Anordnung nach Patentanspruch 1 oder 2, bei welcher das 2. Raumgelenk (46) durch eine an dem Gehäuse (38) umfangsseitig des 1. Raumgelenks (30) lagefixierte Hülse (47) mit einer kugelabschnittsförmigen äußeren Oberfläche (48) sowie einer zylindrischen inneren Oberfläche (49) und einem hinsichtlich seiner inneren Oberfläche (70) an die Oberfläche (48) der Hülse (47) angepassten ringförmigen Gelenkkopf (51) der 3. Schubstange (52) gebildet ist.

4. Anordnung nach Patentanspruch 3, bei welcher zwischen die Buchse (29) und die Hülse (47) des 2. Raumgelenks (46) eine Ausgleichsbuchse (31) eingegliedert ist.

5. Anordnung nach einem der Patentansprüche 1 bis 4, bei welcher der Radadapter (2) zweiteilig gestaltet und der Vertikalbolzen (10) lösbar zwischen die beiden Teile (3, 4) eingegliedert ist.

6. Anordnung nach einem der Patentansprüche 1 bis 5, bei welcher das Krafteinleitungsglied (63) mit einem ringförmigen Gelenkkopf (62) eine hinsichtlich ihrer äußeren Oberfläche (59) kugelabschnittsförmig ausgebildete Hülse (60) umfangsseitig eines zwei Laschen (55, 56) am Radadapter (2) durchsetzenden Tragbolzens (58) umfasst.

7. Anordnung nach einem der Patentansprüche 1 bis 6, bei welcher sich zwischen dem unteren Endabschnitt des Krafteinleitungsglieds (63) und einer zu der Anlenkung (60, 62) des Krafteinleitungsglieds (63) an den Radadapter (2) in der Vertikalebene (VE) seitlich versetzten Anschlaglasche (57) eine Schrägstrebe (66) erstreckt.

## Claims

1. An arrangement for simulating the influences of forces on the wheel of a motor vehicle resulting from the running thereof, said arrangement comprising a wheel adapter (2) with a U-shaped recess (9) which is connected via a 1^{st} three-dimensional joint (30) to a 2^{nd} push-rod (44) simulating a side force (SK) and to a force introduction member (63) in the form of a bar extending substantially perpendicularly beneath the recess (9) and exerting a vertical force (VK), the centrepoint of the 1^{st} three-dimensional joint (30) coinciding with the centrepoint of the 2^{nd} three-dimensional joint (46) to which there is coupled a 3^{rd} push-rod (52) simulating a longitudinal force (LK1), **characterised by** the following features:
- the wheel adapter (2) is constructed in the form of a frame, is disposed in a vertical plane (VE) and is pivotally coupled to a 1^{st} push-rod simulating a longitudinal force (LK) and extending in a horizontal plane (HE) intersecting the wheel centre (7),
- the recess (9) is situated in the region of the imaginary wheel contact point (12) coinciding with the centres of the 1^{st} and 2^{nd} three-dimensional joint (30, 46) and has extending through it a vertical bolt (10) which extends by a longitudinal axis (11) in the vertical plane (VE) extending through the wheel contact point (12) and the wheel centre (7),
- the vertical bolt (10) is coupled via the 1^{st} three-dimensional joint (30) to a multi-part housing (38) which is rigidly connected to the 2^{nd} push-rod (44) extending transversely of the vertical plane (VE) and extending with its horizontal longitudinal axis (69) through the wheel contact point (12) and is coupled via the 2^{nd} three-dimensional joint (46) to the 3^{rd} push-rod (52) which is offset from the 2^{nd} push-rod (44) by 90° and which in respect of its longitudinal axis (54) extends in the vertical plane (VE) and through the wheel contact point (12),
- the longitudinal axis (64) of the force introduction member (63) extends coaxially to the longitudinal axis (11) of the vertical bolt (10).

2. An arrangement according to claim 1, wherein the 1^{st} three-dimensional joint (30) is formed from a sleeve (23) which is fixed peripherally of the vertical bolt (10) and which has an outer surface (22) in the form of a portion of a sphere, and of a bush (29) which is fixed in the housing (38) and which in respect of its inner surface (28) is adapted to the surface (22) of the sleeve (23), the housing (38) having conically widening inner recesses (32) above and below the bush (29).

3. An arrangement according to claim 1 or 2, wherein the 2^{nd} three-dimensional joint (46) is formed by a sleeve (47) positionally fixed on the housing (38) peripherally of the 1^{st} three-dimensional joint (30), said sleeve having an outer surface (48) in the form of a portion of a sphere and a cylindrical inner surface (49) and an annular joint head (51) of the 3^{rd} push-rod (52), said annular joint head (51) being adapted in respect of its inner surface (70) to the surface (48) of the sleeve (47).

4. An arrangement according to claim 3, wherein a compensation bush (31) is incorporated between the bush (29) and the sleeve (47) of the 2^{nd} three-dimensional joint (46).

5. An arrangement according to any one of claims 1 to 4, wherein the wheel adapter (2) is made in two parts and the vertical bolt (10) is releasably incorporated between the two parts (3, 4).

6. An arrangement according to any one of claims 1 to 5, wherein the force introduction member (63) with an annular joint head (62) comprises a sleeve (60) formed as portion of a sphere in respect of its outer surface (59) peripherally of a carrier bolt (58) extending through two lugs (55, 56) on the wheel adapter (2).

7. An arrangement according to any one of claims 1 to 6, wherein an inclined strut (66) extends between the bottom end portion of the force introduction member (63) and a stop lug (57) laterally offset from the articulation (60, 62) of the force introduction member (63) on the wheel adapter (2) in the vertical plane (VE).

## Revendications

1. Dispositif pour simuler sur la roue d'un véhicule automobile l'influence des forces qui résultent de son roulement, lequel dispositif comprend un adaptateur de roue (2) qui présente un évidement en forme de U (9) et qui est relié par une première articulation à mouvement spatial (30) à une deuxième barre de poussée (44) simulant une force latérale (SK) et à un organe d'application de force (63) en forme de barre s'étendant sensiblement verticalement au-dessous de l'évidement (9) et exerçant une force verticale (VK), le centre de la première articulation à mouvement spatial (30) coïncidant avec le centre de la deuxième articulation à mouvement spatial (46) à laquelle est couplée une troisième barre de poussée (52) simulant une force longitudinale (LK1), **caractérisé par** les éléments suivants :
- l'adaptateur de roue (2) est réalisé en forme de cadre, agencé dans un plan vertical (VE) et couplé en articulation à une première barre de poussée (5) qui s'étend dans un plan horizontal (HE) recoupant le centre de roue (7) et qui simule une force longitudinale (LK),
- l'évidement (9) se trouve dans la zone du point fictif d'appui au sol (12) de la roue coïncidant avec les centres de la première et de la deuxième articulation à mouvement spatial (30, 46) et il est traversé par un goujon vertical (10) qui s'étend par son axe longitudinal (11) dans le plan vertical (VE) passant par le point d'appui au sol (12) de la roue et par le centre de roue (7),
- le goujon vertical (10) est couplé par la première articulation à mouvement spatial (30) à un boîtier (38) en plusieurs pièces qui est relié rigidement à la deuxième barre de poussée (44) s'étendant transversalement au plan vertical (VE) et dont l'axe longitudinal horizontal (69) passe par le point d'appui au sol (12) de la roue, et ledit goujon est couplé par la deuxième articulation à mouvement spatial (46) à la troisième barre de poussée (52) décalée de 90° par rapport à la deuxième barre de poussée (44) et dont l'axe longitudinal (54) s'étend dans le plan vertical (VE) et à travers le point d'appui au sol (12) de la roue,
- l'axe longitudinal (64) de l'organe d'application de force (63) s'étend coaxialement à l'axe longitudinal (11) du goujon vertical (10).

2. Dispositif selon la revendication 1, dans lequel la première articulation à mouvement spatial (30) est formée par une douille (23) fixée du côté périphérie du goujon vertical (10) et présentant une surface extérieure (22) en forme de segment sphérique et par un manchon (29) fixé dans le boîtier (38) et adapté par sa surface intérieure (28) à la surface (22) de la douille (23), le boîtier (38) possédant des évidements intérieurs (32) qui s'élargissent en cône au-dessus et au-dessous du manchon (29).

3. Dispositif selon la revendication 1 ou 2, dans lequel la deuxième articulation à mouvement spatial (46) est formée par une douille (47) fixée sur le boîtier (38) du côté périphérie de la première articulation à mouvement spatial (30) avec une surface extérieure (48) en forme de segment sphérique et avec une surface intérieure cylindrique (49) et une tête d'articulation annulaire (51), de la troisième barre de poussée (52), adaptée de par sa surface intérieure (70) à la surface (48) de la douille (47).

4. Dispositif selon la revendication 3, dans lequel un manchon de compensation (31) est intégré entre le manchon (29) et la douille (47) de la deuxième articulation à mouvement spatial (46).

5. Dispositif selon l'une quelconque des revendications 1 à 4, dans lequel l'adaptateur de roue (2) est réalisé en deux pièces et le goujon vertical (10) est intégré de façon détachable entre les deux pièces (3, 4).

6. Dispositif selon l'une quelconque des revendications 1 à 5, dans lequel l'organe d'application de force (63) entoure par une tête d'articulation annulaire (62) une douille (60) réalisée en forme de segment sphérique sur sa face extérieure (59) du côté périphérie d'un goujon porteur (58) traversant deux pattes (55, 56) sur l'adaptateur de roue (2).

7. Dispositif selon l'une quelconque des revendications 1 à 6, dans lequel une entretoise oblique (66) s'étend entre le tronçon d'extrémité inférieur de l'organe d'application de force (63) et une patte de butée (57) décalée latéralement dans le plan vertical (VE) par rapport à la fixation articulée (60, 62) de l'organe d'application de force (63) sur l'adaptateur de roue (2).
